# FASCICULE DE BREVET EUROPEEN

(11) **EP 2 877 355 B1**
(45) Date de publication et mention de la délivrance du brevet: **16.05.2018**
(21) Numéro de dépôt: 13740314.3
(22) Date de dépôt: 26.07.2013
(51) Int. Cl.: B60H 1/00

(54) **SYSTÈME DE CLIMATISATION DE VÉHICULE DE TRANSPORT DE PERSONNES**
KLIMAANLAGENSYSTEM FÜR EIN FAHRZEUG ZUR PERSONENBEFÖRDERUNG
AIR-CONDITIONING SYSTEM FOR A VEHICLE TRANSPORTING PEOPLE

(30) Priorité: 26.07.2012 FR 1257255
(43) Date de publication de la demande: 03.06.2015
(73) Titulaire: BACQUEYRISSES - SOCIETE AUTOMOBILES, 33522 Bruges Cedex (FR)
(72) Inventeur: BACQUEYRISSES, Jean, F-33110 Le Bouscat (FR); NIEDDU, Giovanni, F-33700 Mérignac (FR)
(74) Mandataire: Ipside
(86) Numéro de dépôt international: PCT/EP2013/065816
(87) Numéro de publication internationale: WO 2014/016413

(56) Documents cités:
- EP-A1- 1 741 582
- EP-A1- 1 932 697
- WO-A1-98/34807
- DE-C1- 19 524 660

## Description

La présente invention traite d'un système de climatisation de véhicules de transport en commun et en particulier de la climatisation des véhicules de transport de personnes à refroidissement moteur latéral arrière tels que les bus ou autocars de tourisme.

Traditionnellement, les climatisations de véhicules de transport en commun comportent un ou des condenseurs logés soit au niveau de soutes soit sur le toit de l'autocar ou du bus. Les condenseurs sont refroidis par des ventilateurs électriques dont la consommation est loin d'être négligeable.

Par ailleurs, le compresseur de la climatisation est dans le compartiment moteur arrière accouplé par une courroie au moteur du véhicule. De ce fait, des cheminements longs et complexes de tubulures de transport du fluide frigorifique sont nécessaires entre le compresseur et le condenseur et entre le condenseur et le ou les évaporateurs situés dans l'habitacle du véhicule.

Ces longueurs de tubulures accroissent le poids de la climatisation, causent une perte de charge et des pertes thermiques et imposent de remplir le circuit avec plus de gaz.

Le document EP1 932 697 A1 divulgue un système de climatisation de véhicules de transport en commun à moteur arrière, comportant un condenseur de climatisation disposé le long d'une ouverture spécifique pour le condenseur dans la carrosserie à l'arrière du véhicule et comportant un dispositif spécifique de ventilation pour ce condenseur.

La présente invention vise à simplifier l'implantation des condenseurs de véhicules de transport en commun tels que bus et autocars comportant un compartiment moteur arrière et un refroidissement moteur latéral arrière d'un côté du compartiment moteur et vise à réduire la longueur des tubulures de cette climatisation.

Le refroidissement moteur des véhicules à refroidissement moteur latéral arrière comporte un radiateur dans lequel circule de l'eau de refroidissement du moteur et un ventilateur dont le régime de rotation est généralement commandé en fonction de la température moteur.

Le radiateur est disposé dans une ouverture faite dans la carrosserie du véhicule sur un côté du véhicule en partie arrière du véhicule. Cette ouverture est masquée par une grille ou une porte munie de lamelles inclinées cachant le radiateur et laissant passer l'air.

Le ventilateur de type aspirant l'air au travers du radiateur est placé face au radiateur dans le compartiment moteur du côté opposé à l'ouverture.

Dans le cas d'un moteur turbocompressé à échangeur, l'échangeur est disposé devant le radiateur côté opposé au ventilateur.

Selon la présente invention le condenseur de climatisation est disposé le long du radiateur côté ouverture dans la carrosserie de sorte que l'air aspiré par le ventilateur et traversant le radiateur traverse d'abord le condenseur.

Dans le cas d'un moteur avec turbocompresseur à échangeur, le condenseur se trouve en amont de l'échangeur et de ce fait en regardant l'ouverture latérale faite dans la carrosserie du véhicule on trouve le condenseur puis l'échangeur puis le radiateur et enfin, à l'intérieur du compartiment moteur, le ventilateur.

La disposition d'un condenseur devant un radiateur est connue dans les véhicules particuliers a radiateur frontal. Dans le cas des véhicules de transport en commun à refroidissement latéral, l'homme du métier a toutefois toujours considéré que la position latérale arrière du radiateur était une position défavorable et que le refroidissement moteur ne devait pas être perturbé par un dispositif annexe tel que la climatisation.

Dans cette optique de ne pas perturber le refroidissement moteur et pour garantir un fonctionnement correct de la climatisation la présente invention prévoit dans un mode de réalisation avantageux des moyens adaptés à modifier le pilotage du ventilateur pour accroître sa vitesse de rotation lorsqu'un refroidissement du condenseur est nécessaire, ce dans le but de faire baisser la pression condenseur.

Sur un moteur d'autocar, la régulation de température d'eau par le ventilateur se fait communément dans une plage de température d'eau proche de 90°C et par exemple de l'ordre de 84 à 86°C.

Avantageusement, les moyens adaptés à modifier le pilotage du ventilateur sont des moyens adaptés à réaliser un accroissement de vitesse ventilateur par rapport à la consigne de vitesse donnée par le dispositif de pilotage du ventilateur.

De ce fait, la ventilation du radiateur moteur est toujours supérieure ou égale à la consigne demandée par le motoriste en fonction de la température moteur ce qui évite de perturber le refroidissement du moteur du véhicule.

Dans le cas des ventilateurs à commande hydraulique et vanne de réglage de débit à modulation de puissance par un signal à modulation de largeur d'impulsion (dit PWM), l'ouverture de la vanne est proportionnelle non pas au temps de présence d'une alimentation non nulle mais au temps de présence d'une alimentation nulle de la vanne. Un tel fonctionnement s'explique par une volonté de garantir le refroidissement moteur en mode dégradé c'est à dire en cas d'absence de signal PWM, cas de panne le plus probable.

De ce fait en cas de défaillance de l'alimentation PWM, la vanne se met en position ouverte correspondant à la vitesse maximale du ventilateur ce qui favorise le refroidissement moteur en mode dégradé.

Selon un mode de réalisation particulier, le dispositif de la présente invention comporte un boîtier de commande qui va couper le signal à modulation de largeur d'impulsion PWM, moteur selon un rapport cyclique plus ou moins important en fonction de la pression à l'intérieur du condenseur pour réguler cette dernière en jouant sur la vitesse de rotation du ventilateur dans le sens d'un accroissement de la vitesse ventilateur en réponse à un accroissement de la pression condenseur.

Le boîtier de commande vient par exemple ajouter une composante à modulation de largeur d'impulsion PWM, basse fréquence par exemple environ de une à plusieurs dizaines de Hz sur le signal PWM, de régulation de la vanne de commande ventilateur (PWM moteur) dont la fréquence porteuse est de l'ordre de une à plusieurs centaines de Hz par exemple.

Un mode de réalisation avantageux de la présente invention est de réaliser un ET logique entre le signal PWM moteur et un signal PWM, lent représentatif de la consigne pression condenseur.

L'invention concerne en outre un procédé de pilotage d'un ventilateur de véhicule de transport en commun, à commande hydraulique et vanne de réglage de débit à commande PWM, pour lequel un boîtier de commande coupe le signal PWM moteur selon un rapport cyclique plus ou moins important en fonction d'une pression condenseur pour réguler cette dernière en jouant sur un accroissement de la vitesse de rotation du ventilateur.

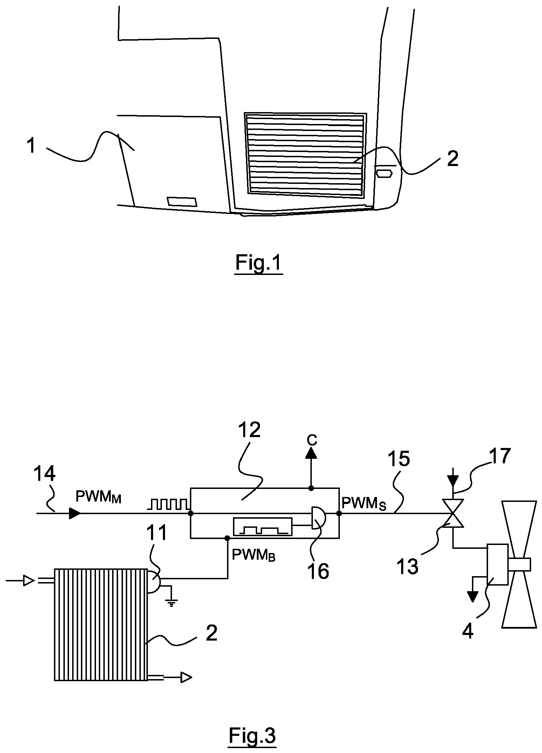

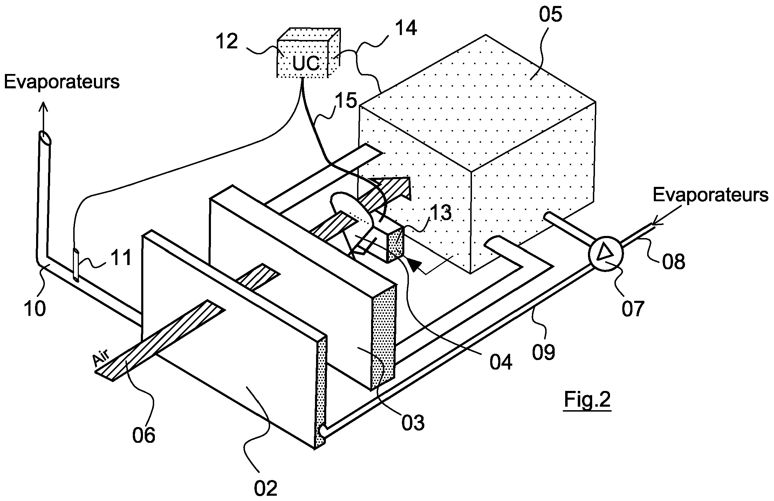

D'autres caractéristiques et avantages de l'invention seront apparents à la lecture qui suit d'un exemple de réalisation non limitatif de l'invention en référence aux dessins qui représentent:
- en figure 1:: une vue d'un condenseur disposé selon l'invention;
- en figure 2:: un schéma représentant le positionnement du condenseur de l'invention par rapport au radiateur et au moteur du véhicule;
- en figure 3:: un schéma électrique d'un dispositif de commande de ventilateur selon un aspect particulier de l'invention.

La figure 1 représente un côté arrière d'un véhicule de transport en commun 1 à refroidissement moteur latéral arrière et comportant un radiateur disposé dans une ouverture faite dans la carrosserie du véhicule sur un côté du véhicule en partie arrière du véhicule. Selon l'invention, un condenseur de climatisation 2 est disposé le long du radiateur côté ouverture dans la carrosserie.

Dans le cas d'un moteur comportant un turbocompresseur à échangeur, le condenseur se trouve en amont de l'échangeur de sorte qu'en regardant l'ouverture latérale faite dans la carrosserie du véhicule on trouve le condenseur puis l'échangeur puis le radiateur et enfin, à l'intérieur du compartiment moteur, le ventilateur.

La figure 2 représente plus précisément l'implantation des divers éléments à savoir un condenseur 2 selon l'invention en amont du radiateur 3 du moteur 5 et, à l'intérieur du compartiment moteur, le ventilateur 4 qui aspire de l'air 6 au travers du condenseur 2 et du radiateur 3.

Le ventilateur est du type ventilateur à commande hydraulique et vanne de réglage de débit 13 à commande par modulation de largeur d'impulsion PWM, pilotée de manière connue par un calculateur du véhicule non représenté.

Toujours en figure 2 sont représentés, le compresseur 7 recevant une tubulure 8 de retour de gaz venant du ou des évaporateurs situés dans l'habitacle du véhicule, une tubulure 9 reliant le compresseur 7 et le condenseur 2 et une tubulure 10 partant du condenseur pour aller vers le ou les évaporateurs.

Un capteur de pression 11, disposé en sortie du condenseur pour mesurer la pression condenseur, est relié à un calculateur de climatisation 12. Le système représenté comporte des moyens adaptés à modifier le pilotage du ventilateur 4 de refroidissement du radiateur 3 pour accroître sa vitesse de rotation lorsqu'un refroidissement du condenseur est nécessaire.

Ces moyens sont constitués ici par le calculateur 12 de climatisation qui est intercalé dans le circuit de commande de l'électrovanne 13 et reçoit le signal de commande de l'électrovanne par une liaison 14, une sortie du calculateur 12 étant reliée à l'électrovanne 13 de commande du ventilateur 4.

Les moyens adaptés à modifier le pilotage du ventilateur dans le calculateur 12 sont des moyens adaptés à réaliser un accroissement de vitesse ventilateur par rapport à la consigne de vitesse donnée par un dispositif de pilotage du ventilateur.

Le calculateur 12 ou boîtier de commande est adapté à couper le signal PWM moteur selon un rapport cyclique plus ou moins important en fonction de la pression condenseur mesurée par le capteur de pression 11 pour réguler cette dernière en jouant sur la vitesse de rotation du ventilateur.

Selon la figure 3, le boîtier de commande ou calculateur 12 est adapté à ajouter une composante PWM, basse fréquence PWM_{B} sur le signal PWM_{M} de régulation de la vanne de commande ventilateur issu du calculateur moteur.

La composante basse fréquence est d'environ 15 Hz, par exemple de 10 à 20 Hz pour une PWM moteur dont la fréquence porteuse est de l'ordre de 200Hz.

Plus généralement, la composante PWM, basse fréquence reste dans la plage de une à plusieurs dizaines de Hz, le signal PWM moteur, de régulation de la vanne de commande ventilateur ayant une fréquence porteuse de l'ordre de une à plusieurs centaines de Hz.

Le boîtier 12 réalise un ET logique 16 entre le signal PWM_{M} moteur et le signal PWM_{B} lent représentatif de la consigne pression condenseur.

Le calculateur 12 constitue ainsi des moyens adaptés à modifier le pilotage du ventilateur de refroidissement du radiateur pour accroître sa vitesse de rotation lorsqu'un refroidissement du condenseur est nécessaire.

Le calculateur réalise alors un accroissement de vitesse ventilateur par rapport à la consigne de vitesse donnée par le dispositif de pilotage du ventilateur du véhicule.

On notera que selon le dispositif de régulation de l'invention, la régulation de la pression du condenseur ne s'oppose pas à la régulation de la température moteur du fait que les besoins en climatisation sont réduits par basse température et accrus par haute température. Les besoins en refroidissement moteur ayant la même tendance, les deux régulations ne s'opposent pas.

Par exemple, dans le cas d'un condenseur que l'on cherche à limiter à 20 bar, la régulation pression condenseur est réglée pour se mettre en fonction à 12,5 bar puis la consigne augmente jusqu'à atteindre son maximal à 20 bar. Le signal PWM_{B} suit la consigne.

Avant la mise en fonction de la régulation pression, la vitesse ventilateur est uniquement régulée par la consigne moteur. A 20 bar le ventilateur est en vitesse maximale, la consigne moteur n'a plus d'effet. Entre 12,5 bar et 20 bar, la vitesse moteur est égale à la vitesse de ventilateur correspondant à la consigne moteur augmentée de la consigne pression.

Au niveau de la régulation pression, le dispositif de commande est un calculateur de régulation climatisation qui reçoit une information pression au niveau d'une sonde de pression. Le calculateur 12 comprend un élément de commande tel qu'un interrupteur, relais, interrupteur analogique ou transistor sur la ligne de commande entre le calculateur moteur et la vanne de régulation de vitesse du ventilateur pour générer le signal de commande de régulation de pression superposé au signal de commande ventilation moteur.

Le calculateur 12 de régulation climatisation comprend les moyens de calcul de la largeur d'impulsion PWM_{B} de la régulation pression et en outre comprend des lois de commandes particulières par exemple une loi de commande forçant une grande vitesse dans le cas d'une augmentation de pression rapide telle que supérieure à 4 bars pendant 2 secondes.

Le calculateur de régulation climatisation comporte une commande de mise en marche / arrêt de la climatisation C et est en outre avantageusement adapté à forcer une mise en route de la climatisation du véhicule par temps froid pour utiliser le condenseur comme moyen de réchauffer le radiateur moteur et ainsi réduire le temps de mise en chauffe du moteur. Ceci est complété par le fait que la climatisation constitue alors une charge moteur qui accélère son chauffage.

Par ailleurs, le calculateur de régulation peut, dans le cas par exemple où la pression condenseur monte alors que le ventilateur est déjà au maximum, être programmé pour couper la climatisation ou, pour un circuit à évaporateurs multiples, commander une mise hors fonction d'une partie des évaporateurs afin de réduire la puissance demandée à la climatisation et ainsi refroidir le condenseur qui ne réchauffera ainsi plus l'air aspiré au travers du radiateur moteur.

Selon les figures 2 et 3 le boîtier de commande de l'électrovanne en fonction de la pression condenseur et le boîtier de commande de la climatisation sont un boîtier unique mais ces boîtiers peuvent être des boîtiers séparés.

Le système de l'invention permet un gain de poids notable, un condenseur équipé d'une ventilation électrique avec son châssis avoisinant les 60 kg alors que le condenseur seul muni de pattes de fixation a une masse de l'ordre de 7 à 10 kg.

Ce système permet un gain sur les tuyauteries fluide réfrigérant de 8 à 10 mètres et un gain sur le fluide permettant de passer d'une masse de fluide de environ 9 kg à une masse de fluide d'environ 5,5 kg.

L'invention ne se limite pas à l'exemple décrit et notamment, les valeurs données sont susceptibles de varier selon les plages de tolérance usuelles dans le domaine concerné de la climatisation de véhicules tout en restant dans le cadre de l'invention, telle que définie par les revendications.

## Revendications

1. - Système de climatisation de véhicules de transport en commun, à refroidissement moteur latéral arrière et comportant un radiateur (3) disposé dans une ouverture faite dans la carrosserie du véhicule sur un côté du véhicule en partie arrière du véhicule, **caractérisé en ce qu'**il comporte un condenseur (2) de climatisation disposé le long du radiateur (3) côté ouverture dans la carrosserie.

2. - Système de climatisation selon la revendication 1 **caractérisé en ce qu'**il comporte des moyens (12) adaptés à modifier le pilotage d'un ventilateur (4) de refroidissement du radiateur (3) pour accroître sa vitesse de rotation lorsqu'un refroidissement du condenseur est nécessaire.

3. - Système de climatisation selon la revendication 2 pour lequel les moyens (12) adaptés à modifier le pilotage du ventilateur (4) sont des moyens adaptés à réaliser un accroissement de vitesse ventilateur par rapport à la consigne de vitesse donnée par un dispositif de pilotage du ventilateur.

4. - Système de climatisation selon la revendication 3, adapté à un ventilateur (4) à commande hydraulique (17) et vanne (13) de réglage de débit à commande à modulation de largeur d'impulsion (PWM), comportant un boîtier de commande (12) adapté à couper le signal PWM moteur selon un rapport cyclique plus ou moins important en fonction d'une pression condenseur mesurée par un capteur de pression (11) pour réguler cette dernière en jouant sur la vitesse de rotation du ventilateur.

5. - Système de climatisation selon la revendication 4, pour lequel le boîtier de commande (12) est adapté à ajouter une composante à modulation de largeur d'impulsion, basse fréquence PWM_{B} sur le signal PWM_{M} de régulation de la vanne (13) de commande ventilateur (4).

6. - Système de climatisation selon la revendication 4 ou 5, pour lequel le boîtier (12) réalise un ET logique (16) entre le signal PWM_{M} moteur et un signal PWM_{B} lent représentatif de la consigne pression condenseur.

7. - Véhicule de transport en commun, à refroidissement moteur latéral arrière et comportant un radiateur (3) disposé dans une ouverture faite dans la carrosserie du véhicule sur un côté du véhicule en partie arrière du véhicule, comportant un système de climatisation selon l'une quelconque des revendications précédentes et pour lequel en regardant l'ouverture latérale faite dans la carrosserie du véhicule on trouve le condenseur (2) puis le radiateur (3) et enfin, à l'intérieur du compartiment moteur, le ventilateur (4).

8. - Véhicule de transport en commun selon la revendication 7 pour lequel, le moteur comportant un turbocompresseur à échangeur, le condenseur se trouve en amont de l'échangeur et pour lequel en regardant l'ouverture latérale faite dans la carrosserie du véhicule on trouve le condenseur puis l'échangeur puis le radiateur et enfin, à l'intérieur du compartiment moteur, le ventilateur.

## Patentansprüche

1. Klimasystem für öffentliche Transportmittel mit einer rückwärtigen seitlichen Motorkühlung und umfassend einen Kühler (3), der in einer Öffnung angeordnet ist, die im Fahrzeugaufbau auf einer Seite des Fahrzeugs im rückwärtigen Teil des Fahrzeugs ausgeführt ist, **dadurch gekennzeichnet, dass** es einen Klimakondensator (2) umfasst, der entlang dem Kühler (3) auf Seite der Öffnung im Aufbau angeordnet ist.

2. Klimasystem nach Anspruch 1, **dadurch gekennzeichnet, dass** es Mittel (12) umfasst, die zum Ändern der Ansteuerung eines Lüfters (4) zur Kühlung des Kühlers (3) angepasst sind, um dessen Drehzahl zu erhöhen, wenn eine Kühlung des Kondensators notwendig ist.

3. Klimasystem nach Anspruch 2, wobei die Mittel (12), die zum Ändern der Ansteuerung des Lüfters (4) angepasst sind, Mittel sind, die zum Durchführen einer Erhöhung der Geschwindigkeit des Lüfters in Bezug auf den Sollwert der Geschwindigkeit, der von einer Vorrichtung zur Ansteuerung des Lüfters vorgegeben wird, angepasst sind.

4. Klimasystem nach Anspruch 3, angepasst an einen Lüfter (4) mit hydraulischer Steuerung (17) und Durchflussregelventil (13) mit Pulsweitenmodulationssteuerung-(PWM), umfassend einen Steuerkasten (12), der zum Unterbrechen des Motor-PWM-Signals gemäß einem mehr oder weniger hohen Tastverhältnis in Abhängigkeit eines mittels eines Drucksensors (11) gemessenen Kondensatordrucks angepasst ist, um Letzteren durch Beeinflussen der Drehzahl des Lüfters zu regeln.

5. Klimasystem nach Anspruch 4, wobei der Steuerkasten (12) angepasst ist, um eine Niederfrequenz-Pulsweitenmodulationskomponente PWM_{B} dem Signal PWM_{M} zum Regeln des Ventils (13) zur Steuerung des Lüfters (4) hinzuzufügen.

6. Klimasystem nach Anspruch 4 oder 5, wobei der Kasten (12) eine UND-Logik (16) zwischen dem Motorsignal PWM_{M} und einem langsamen Signal PWM_{B} durchführt, das bezeichnend ist für den Sollwert des Kondensatordrucks.

7. Öffentliches Transportmittel mit einer rückwärtigen seitlichen Motorkühlung und umfassend einen Kühler (3), der in einer Öffnung angeordnet ist, die im Fahrzeugaufbau auf einer Seite des Fahrzeugs im rückwärtigen Teil des Fahrzeugs ausgeführt ist, umfassend ein Klimasystem nach einem der vorstehenden Ansprüche und wobei, bei Betrachtung der seitlichen Öffnung, die im Fahrzeugaufbau ausgeführt ist, man den Kondensator (2), danach den Kühler (3) und schließlich im Inneren des Motorraums den Lüfter (4) vorfindet.

8. Öffentliches Transportmittel nach Anspruch 7, wobei, der Motor einen Turbolader mit Ladeluftkühler umfassend, der Kondensator sich stromaufwärts vom Ladeluftkühler befindet, und wobei, bei Betrachtung der seitlichen Öffnung, die im Fahrzeugaufbau ausgeführt ist, man den Kondensator, danach den Ladeluftkühler, danach den Kühler und schließlich im Inneren des Motorraums den Lüfter vorfindet.

## Claims

1. System for air-conditioning public transport vehicles, with rear-side engine cooling and comprising a radiator (3) arranged in an opening made in the bodywork of the vehicle on one side of the vehicle in the rear part of the vehicle, **characterised in that** it comprises an air-conditioning condenser (2) arranged along the radiator (3) on the side of the opening in the bodywork.

2. Air-conditioning system according to claim 1, **characterised in that** it comprises means (12) adapted to modify the controlling of a cooling ventilator (4) of the radiator (3) to increase the rotation speed thereof when a cooling of the condenser is necessary.

3. Air-conditioning system according to claim 2, for which the means (12) adapted to modify the controlling of the ventilator (4) are means adapted to achieve an increase in ventilator speed in relation to the speed setpoint given by a ventilator controlling device.

4. Air-conditioning system according to claim 3, adapted to a ventilator (4) with a hydraulic control (17) and valve (13) for adjusting the pulse-width modulation (PWM) control flow, comprising a control unit (12) adapted to cut the engine PWM signal according to a more or less significant cyclical ratio, according to a condenser pressure measured by a pressure sensor (11) to adjust the latter by adjusting the rotation speed of the ventilator.

5. Air-conditioning system according to claim 4, for which the control unit (12) is adapted to add a low-frequency PWM_{B} pulse-width modulation component onto the PWM_{M} signal for adjusting the valve (13) of the ventilator (4) control.

6. Air-conditioning system according to claim 4 or 5, for which the unit (12) produces a logical AND (16) between the engine signal PWM_{M} and a slow PWM_{B} signal, representative of the condenser pressure setpoint.

7. Public transport vehicle, with rear-side engine cooling and comprising a radiator (3) arranged in an opening made in the bodywork of the vehicle on one side of the vehicle in the rear part of the vehicle, comprising an air-conditioning system according to any one of the preceding claims and for which by viewing the side opening made in the bodywork of the vehicle, the condenser (2) is situated, then the radiator (3) and finally, inside the engine compartment, the ventilator (4).

8. Public transport vehicle according to claim 7, for which, the engine comprising an exchanger turbocharger, the condenser is situated upstream of the exchanger and for which looking at the side opening made in the bodywork of the vehicle, is found the condenser, then the exchanger, then the radiator and finally, inside the engine compartment, the ventilator.
